# FASCICULE DE BREVET EUROPEEN

(11) **EP 4 311 685 B1**
(45) Date de publication et mention de la délivrance du brevet: **18.06.2025**
(21) Numéro de dépôt: 23187712.7
(22) Date de dépôt: 25.07.2023
(51) Int. Cl.: B60B 3/10, B60B 3/12, B60B 5/02, B60B 7/02, B60B 7/06

(54) **JANTE COMPOSITE POUR ROUE DE VEHICULE**
VERBUNDFELGE FÜR EIN FAHRZEUGRAD
COMPOSITE RIM FOR A VEHICLE WHEEL

(30) Priorité: 27.07.2022 FR 2207707
(43) Date de publication de la demande: 31.01.2024
(73) Titulaire: Duqueine Rhone Alpes, 01600 Massieux (FR)
(72) Inventeur: DUQUEINE, Gilles, 69270 FONTAINES-SUR-SAONE (FR); MANGIN, Philippe, 69006 LYON (FR); NOEL, Florent, 69480 MARCY (FR)
(74) Mandataire: Cabinet Laurent & Charras

(56) Documents cités:
- FR-A1- 3 050 686
- FR-A1- 3 071 772
- US-A1- 2016 272 000

## Description

### Domaine technique

La présente invention concerne une jante composite pour roue de véhicule, comportant un tambour pourvu d'un fond de jante destiné à recevoir un pneumatique, et un voile pourvu d'un moyeu central destiné à être monté sur un essieu de véhicule et d'une pluralité d'éléments de liaison s'étendant entre le moyeu central et le tambour.

### Technique antérieure

Des études ont démontré que pour décarboner les véhicules, une des clés du succès est de réduire leur masse, car la quantité d'énergie pour déplacer le véhicule est fortement dépendante de sa masse. Par « véhicule », on entend tout véhicule équipé de roues, pour le transport de personnes et/ou de fret, sur terre et dans les airs.

75% de la consommation d'un véhicule serait liée à sa masse. La roue (jante équipée de son pneu) est une masse non suspendue qui est soumise à trois forces, liées à l'énergie de translation, car la roue avance, à l'énergie de rotation, car elle tourne et à l'énergie de rebond, car elle suit les irrégularités de la route. Gagner 1kg de masse non suspendue équivaut à plusieurs kilos de masse suspendue. La jante de la roue présente donc un effet levier quant à la réduction de la quantité d'énergie nécessaire au roulage du véhicule, et donc à la consommation, que ce soit de carburant fossile ou biosourcé, d'électricité ou d'hydrogène. Ainsi, le gain pour l'environnement est immédiat.

En complément de l'optimisation de masse, des gains sur l'aérodynamisme du véhicule peuvent être aussi apportés par la jante. En effet, les jantes et les passages de roues contribuent à 25% de la trainée aérodynamique des véhicules. La publication US 2016/272000 A1 propose une jante en aluminium dont les performances aérodynamiques sont améliorées par le design et le profil des rayons et des ouvertures d'aération en jouant sur la forme et l'épaisseur d'une mousse adhésive utilisée pour combler le volume entre les rayons du voile et les rayons d'un enjoliveur.

Actuellement, les jantes sont majoritairement réalisées en aluminium, qui possède une densité de 2.7, ce qui est faible pour un alliage métallique, mais qui pourrait avantageusement être remplacé par des matériaux composites, à base de fibres de carbone et de résine, avec une densité de 1.6, soit plus léger de 40%. Les publications FR 3 050 686 A1 et FR 3 071 772 A1 décrivent des exemples de jante en aluminium dont les performances mécaniques, acoustiques et/ou esthétiques sont améliorées par l'ajout d'un ou de plusieurs renforts en matériaux composites, sans augmenter significativement leur masse.

La revue du symposium international de châssis de 2014 a publié un article sur les développements de roues en composites (Source : Pfeffer, Peter E., ed. 2014. 5th International Munich Chassis Symposium 2014. Chassis.tech plus. Proceedings. Wiesbaden: Springer Fachmedien Wiesbaden. https://doi.org/10.1007/978-3-658-05978-1.)

Les jantes composites ont été développées à partir des années 1980, d'abord à partir d'un mélange de résine et de fibres de verre, puis de résine et de fibres de carbone qui apportent plus de rigidité, et offrent une esthétique nouvelle aux roues des véhicules. On peut citer à titre d'exemple les publications suivantes : US 4,294,490 ; US 7,040,714 B2 ; WO 2010/025495 A1 ; US 10,723,172 B2. Cependant, les procédés de fabrication sont chronophages et coûteux car peu automatisables, compte tenu de la géométrie complexe des jantes. Ainsi, le prix des jantes composites est prohibitif et les jantes composites sont réservées à une élite. Ce type de j antes est notamment plébiscité sur les véhicules à caractère sportif (Ferrari^{®}, McLaren^{®}, Lamborghini^{®}, etc.).

Il existe un besoin de démocratisation des j antes composites pour les rendre accessibles à un public plus large, pouvoir les installer sur des voitures plus conventionnelles produites en série, et créer ainsi un levier d'amélioration sur le plan environnemental immédiat.

### Exposé de l'invention

La présente invention vise à répondre à cette demande en proposant une nouvelle architecture de jante composite dans laquelle certaines fonctions ont été dissociées. Ainsi dissociés les éléments constitutifs et structurels de la jante deviennent beaucoup plus simples à fabriquer et réduisent considérablement la complexité et le taux de rebut des matières premières, de même les procédés industriels peuvent être plus facilement automatisés, permettant de fabriquer des jantes performantes à forte cadence, avec une reproductibilité et une fiabilité importante, pour un prix de revient réduit. D'autres avantages apparaitront dans la suite de la description.

Dans ce but, l'invention concerne une jante composite du genre indiqué en préambule, caractérisée en ce que le tambour, le voile et le flasque constituent des pièces de structure, lesdites pièces de structure étant réalisées en matériaux composites formant une jante tout composite, ou l'une des pièces de structure parmi ledit tambour et ledit voile étant réalisée en matériaux métalliques et l'autre pièce de structure parmi ledit voile et ledit tambour étant réalisée en matériaux composites formant une jante hybride.

Cette nouvelle architecture de jante composite pourvue d'un flasque additionnel qui est rapporté et solidarisé au reste de la jante, permet d'ajouter d'autres fonctionnalités, telles que :
- apporter à la jante complète une raideur/rigidité supplémentaire, ainsi qu'un réglage précis de cette raideur/rigidité supplémentaire,
- apporter une variation de comportement du véhicule, à partir de tambours et de voiles identiques,
- ou apporter par des raideurs/rigidités différentes des flasques entre l'essieu avant et l'essieu arrière du véhicule un réglage de comportement (sous-vireur, neutre ou survireur),
- apporter de l'aérodynamisme en jouant sur le taux d'ouverture/fermeture du flasque,
- apporter du refroidissement au système de freinage, par extraction ou ventilation d'air, en jouant sur la géométrie du flasque, type turbofan,
- procéder au remplacement du flasque en cas de dommages,
- personnaliser le motif du flasque par exemple pour des séries spéciales,
- personnaliser la raideur/rigidité de la jante pour absorber des variations de puissance et de performances de différentes versions d'un véhicule.

Selon les variantes de réalisation, le flasque est en contact surfacique avec tout ou partie des éléments de liaison et avec au moins un bord périphérique dudit tambour, ledit flasque étant solidarisé audit voile et audit tambour par un collage structural.

Lorsque lesdites pièces de structure parmi le tambour et le voile sont réalisées en matériaux composites, elles forment un ensemble structurel monobloc.

Lorsque l'une desdites pièces de structure parmi le tambour et le voile est réalisée en matériaux métalliques et l'autre pièce de structure parmi le voile et le tambour est réalisée en matériaux composites, elles sont solidarisées par des organes de fixation.

Ledit flasque comporte avantageusement une superposition de couches de renfort présentant des directions de renforcement privilégiées, les directions de renforcement desdites couches de renfort étant croisées l'une par rapport à l'autre, et imprégnées par une matrice. Les renforts desdites couches peuvent être choisis dans le groupe comprenant les fibres de carbone, les fibres minérales, végétales, artificielles, synthétiques, métalliques, animales, ou une combinaison d'au moins desdites fibres.

Au moins une des couches de renfort dudit flasque peut être constituée de mèches de fibres unidirectionnelles s'étendant en tout ou partie radialement dans ledit flasque.

Ledit flasque peut comporter au moins une couche de renfort externe tissée ou non tissée, ladite couche de renfort externe pouvant définir un motif répétitif, organisé ou aléatoire.

Selon les variantes de réalisation, ledit flasque peut présenter une épaisseur comprise entre 0,5mm et 5mm, ladite épaisseur étant constante ou variable au moins dans le sens radial.

Ledit flasque peut comporter une paroi discale ajourée et/ou une pluralité d'éléments de liaison, tout ou partie des éléments de liaison du flasque épousant la forme des éléments de liaison dudit voile.

La jante peut en outre comporter des inserts métalliques sous la forme de pièces annulaires positionnées au droit des trous de passage pour des organes de fixation de la roue sur le véhicule et/ou du moyeu central.

La jante peut également comporter, sur sa face extérieure, une zone centrale rentrante en forme de cuvette, comportant ledit moyeu central, ladite cuvette étant définie par ledit voile et recouverte par ledit flasque.

Selon les variantes de réalisation, ledit tambour peut comporter une collerette extérieure faisant partie intégrante du tambour ou rapportée au fond de jante dudit tambour.

### Brève description des dessins

La présente invention et ses avantages apparaîtront mieux dans la description suivante de plusieurs modes de réalisation donnés à titre d'exemples non limitatifs, en référence aux dessins annexés, dans lesquels :
- La figure 1 est une vue éclatée en perspective d'une jante tout composite selon l'invention,
- La figure 2 est une vue de face de la jante de la figure 1 assemblée,
- La figure 3 est une vue de côté du tambour de la jante de la figure 1,
- La figure 4 est une vue de côté du flasque de la jante de la figure 1,
- La figure 5 est une section de la jante selon la section V-V de la figure 2,
- La figure 6 est une vue éclatée en perspective d'une jante hybride selon une variante de l'invention,
- La figure 7 est une vue de face de la jante de la figure 6 assemblée,
- La figure 8 est une vue de côté du flasque de la jante de la figure 6,
- La figure 9 est une section de la jante selon la section IX-IX de la figure 7,
- La figure 10 est un graphe illustrant l'apport de rigidité conique en % de la jante tout composite selon l'invention en fonction d'un flasque rapporté et collé de différentes épaisseurs, conformément au test de mesure de rigidité conique schématisé, et
- La figure 11 est un graphe similaire à celui de la figure 10 illustrant l'apport de rigidité axiale en %, conformément au test de mesure de rigidité axiale schématisé.

### Description des modes de réalisation

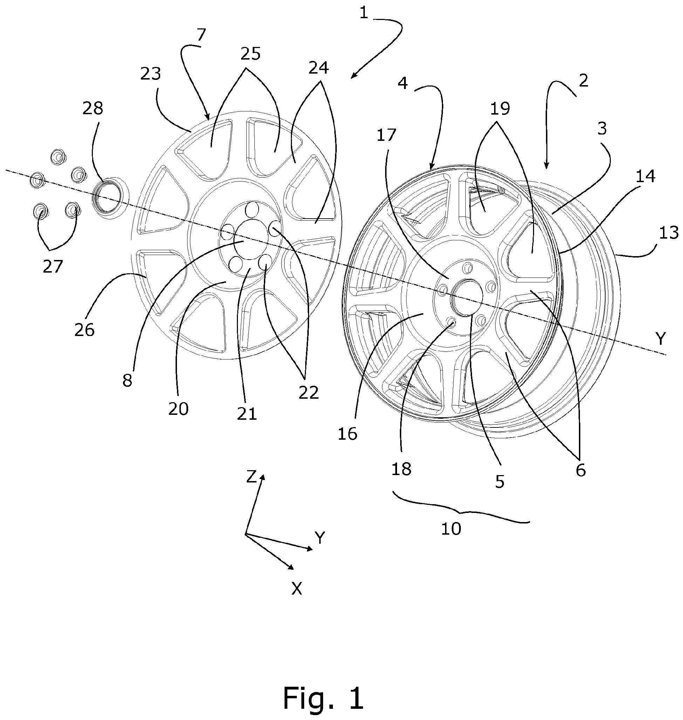

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Les axes X, Y et Z sont quant à eux définis par un repère orthonormé illustré à la figure 1. Par ailleurs, les positions géométriques indiquées dans la description et les revendications, telles que « perpendiculaire », « parallèle », « symétrique » ne sont pas limitées au sens strict défini en géométrie, mais s'étendent à des positions géométriques qui sont proches, c'est-à-dire qui acceptent une certaine tolérance dans le domaine technique considéré, sans influence sur le résultat obtenu. Cette tolérance est notamment introduite par l'adverbe « sensiblement », sans que ce terme soit nécessairement répété devant chaque adjectif.

En référence aux figures, la jante 1, 1' selon l'invention comporte au moins les pièces de structure suivantes :
- un tambour 2 d'axe central Y pourvu d'un fond de jante 3 agencé pour recevoir et maintenir un pneumatique (non représenté) aussi bien axialement que radialement, et permettre son maintien en pression,
- un voile 4, 4' pourvu d'un moyeu central 5 coaxial à l'axe central Y, destiné à être monté sur un essieu de véhicule (non représenté) et d'une pluralité d'éléments de liaison 6 assurant la liaison entre le moyeu central 5 et le tambour 2, et apportant la rigidité à la jante, et
- un flasque 7 rapporté, qui recouvre au moins partiellement le voile 4, forme la face extérieure de la jante, et peut comporter une ouverture centrale 8 au droit du moyeu central 5 ;
- ces pièces de structure étant solidarisées entre-elles pour former une jante 1 structurelle monobloc, répondant au cahier des charges correspondant.

Par « pièce de structure », il faut comprendre une pièce destinée à supporter et à transmettre ou transférer des charges.

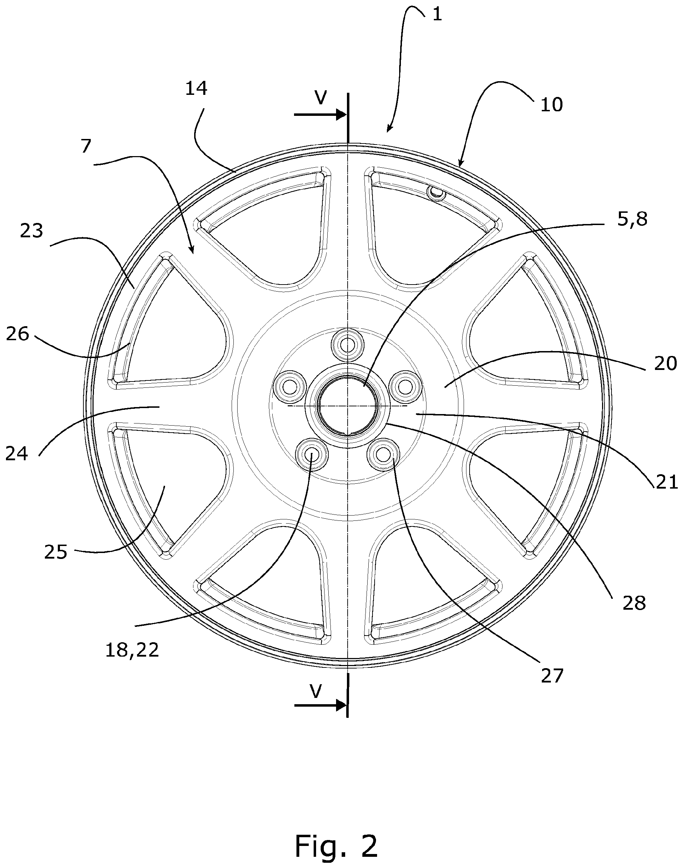

Toutes les pièces de structure de la jante 1 peuvent être réalisées en matériaux composites, conformément à la forme de réalisation illustrée dans les figures 1 à 5. On parle alors de jante 1 tout composite ou « full composite » ou « full carbon » en anglais.

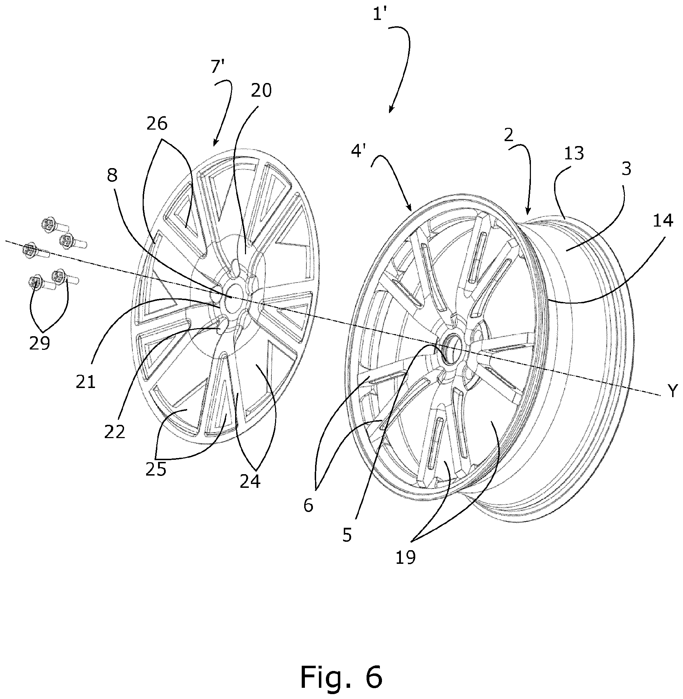

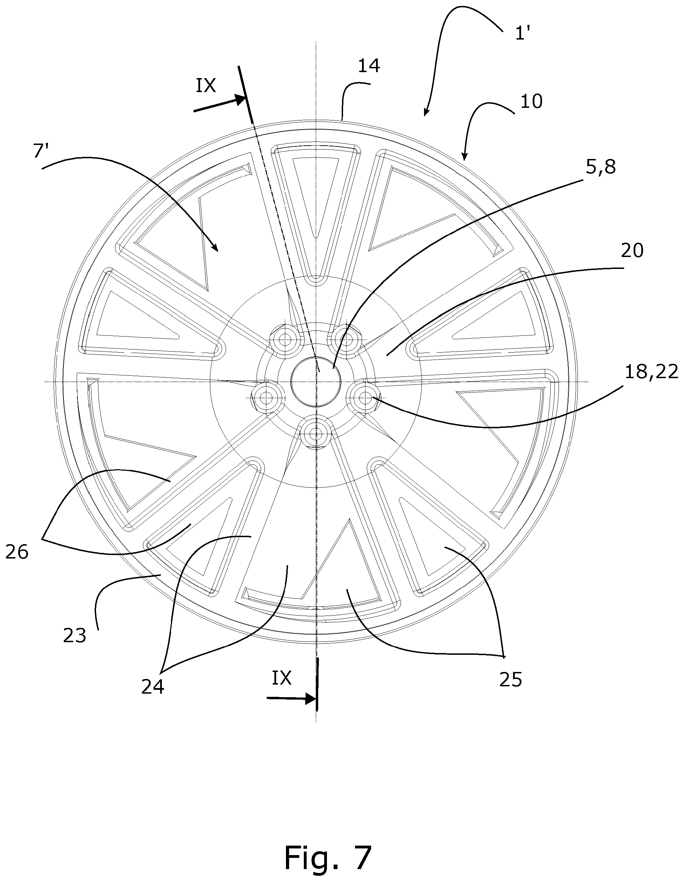

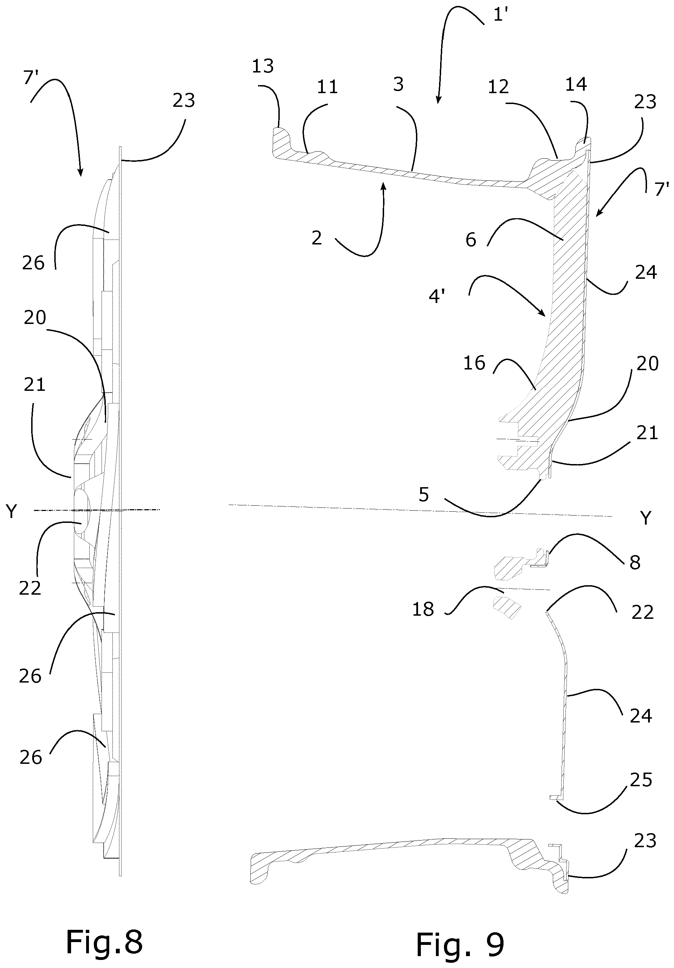

En variante, une des pièces de structure de la jante 1, parmi le tambour 2 et le voile 4, peut être réalisée en métal, tel qu'en alliage d'aluminium ou similaire, tandis que l'autre pièce parmi le voile 4 et le tambour 2 est réalisée en matériaux composites. On parle alors de jante 1' hybride « composite/métal » ou « composite/aluminium ». Toutefois dans la description, le terme « jante composite » est générique et couvre la jante tout composite et la jante hybride. La variante de réalisation de la jante 1' illustrée aux figures 6 à 9 concerne une jante dont le voile 4' est en métal et le tambour 2 est en composite, sans que cette variante ne soit limitative, puisque l'inverse est envisageable.

Dans tous les modes de réalisation, le flasque 7 est réalisé en matériaux composites, et est conçu pour épouser en tout ou partie des formes du voile 4, 4', afin d'être solidarisé en tout ou partie aux éléments de liaison 6 et, selon les variantes, au moyeu central 5 du voile ainsi qu'au tambour 2 pour former une jante structurelle monobloc 1, 1'.

Dans le cadre de l'invention, il faut comprendre par « matériau composite » un matériau qui comporte généralement une préforme de renfort à base de fibres, imprégnée d'une matrice à base de polymères, et complétée le cas échéant par des charges et/ou des additifs. La préforme de renfort peut présenter différentes architectures telles qu'en mèche, nappe, unidirectionnelle, multidirectionnelle, tissu, tricot, non-tissé, etc. Les fibres peuvent être des fibres continues ou discontinues, courtes ou longues, choisies parmi les fibres de carbone, les fibres minérales, végétales, artificielles, synthétiques, métalliques, animales, une combinaison de tout ou partie de ces fibres, ou des fibres de toute autre nature communément utilisée dans les matériaux composites. Les polymères peuvent être des résines thermoplastiques ou des résines thermodurcissables, communément utilisées dans les matériaux composites, ou encore une combinaison des deux types de résines.

Plus particulièrement, on privilégiera les fibres de carbone car elles présentent un très bon compromis de rigidité et de résistance par rapport à la masse, et sont déjà largement utilisées dans toutes les applications structurelles nécessitant une grande rigidité et une grande résistance, comme les châssis-coques, les montants de portières, etc. ; associées en outre à une résine époxy thermodurcissable qui possède de bonnes caractéristiques mécaniques et de résistance à l'impact permettant la réalisation de pièces de structure performantes (véhicules et voiliers de compétition, aéronautique).

Dans la première forme de réalisation en référence aux figures 1 à 5, les pièces de structure formées par le tambour 2 et le voile 4 sont réalisées en matériaux composites au moyen de procédés de fabrication connus qui ne seront pas détaillés, et qui permettent de réaliser un ensemble structurel monobloc « tambour + voile » 10 répondant au cahier des charges en termes de rigidité, résistance, tenue à la fatigue et résistance à l'impact, pour un gain de masse d'environ 40% par rapport à une jante aluminium (densité de l'aluminium : 2.7 / densité composite « carbone et époxy » : 1.6). On peut citer à titre d'exemples non limitatifs les procédés de fabrication par voie sèche ou voie humide, les procédés à renforts multiaxiaux non-ondulés appelés NCF (Non-crimp fabrics), les procédés de placement de fibres appelés AFP (Automatic Fiber Placement) ou TFP (Tailored Fiber Placement), etc.

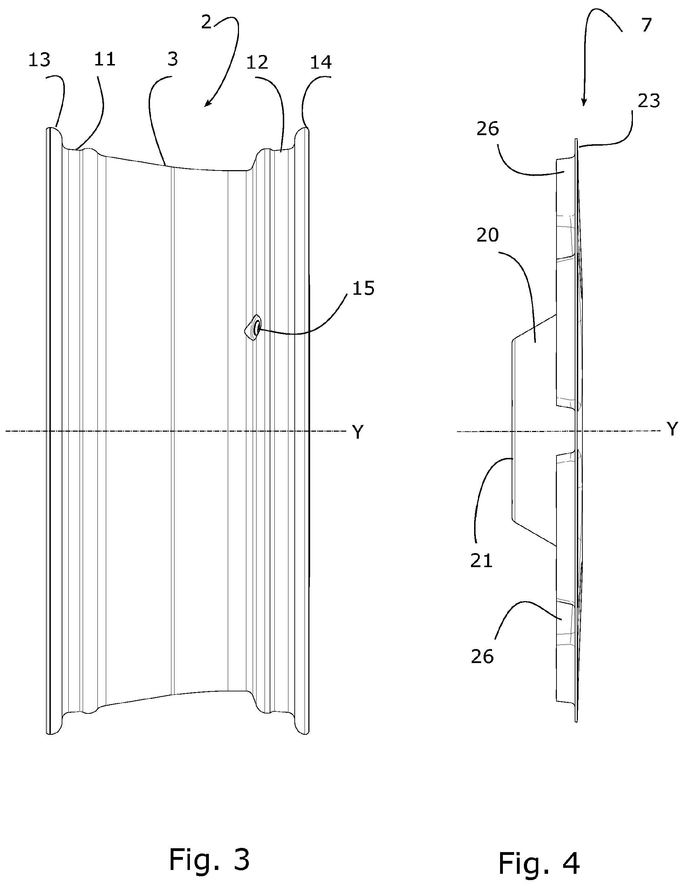

Le tambour 2 comporte, en référence à la figure 3 et de manière connue, une partie centrale cylindrique pleine, d'axe Y, plus ou moins creuse, constituant le fond de jante 3 conçu pour recevoir un pneumatique, bordée par un talon de jante intérieur 11 et un talon de jante extérieur 12 sur lesquels le pneumatique prend appui, puis terminée par un rebord de jante intérieur 13 et un rebord de jante extérieur 14 bloquant le pneumatique axialement. Le tambour 2 comporte également un orifice traversant 15, disposé entre le fond de jante 3 et le talon de jante extérieur 14, prévu pour recevoir la valve du pneumatique (non représentée).

Le tambour 2 peut être réalisé en une partie ou en plusieurs parties si l'on souhaite simplifier le procédé de fabrication pour l'automatiser, notamment lorsqu'il est réalisé en matières composites. Par exemple, il peut être scindé en deux parties : une première partie comportant le fond de jante 3, le talon de jante intérieur 11 et le rebord de jante intérieur 13, et une seconde partie comportant le talon de jante extérieur 12 et le rebord de jante extérieur 14, appelée par la suite « collerette extérieure ». Dans ce cas, les deux parties peuvent être fabriquées séparément et solidarisées entre-elles par des organes de fixation (non représentés) ou tout autre procédé d'assemblage compatible avec les matériaux retenus pour les parties du tambour.

Le voile 4 comporte, en référence aux figures 1, 2 et 5 et de manière connue, une partie discale ajourée, d'axe Y, pourvue d'une zone centrale plus ou moins rentrante en forme de cuvette 16, et du moyeu central 5 prévu pour recevoir un essieu de véhicule. Le fond de cuvette 17 comporte des trous de passage 18 pour des organes de fixation (non représentés) agencés pour fixer la roue sur le véhicule, ces trous de passage 18 étant régulièrement répartis autour du moyeu central 5. Le voile 4 comporte en outre une pluralité d'éléments de liaison 6, tels que des bâtons encore appelés des rayons, s'étendant en tout ou partie radialement dans la partie discale restante depuis la cuvette 17 et régulièrement répartis. Les éléments de liaison 6 peuvent présenter toute autre forme que celle de bâtons et/ou peuvent s'étendre dans différentes directions aussi bien radiales que transversales, l'essentiel étant d'assurer la liaison entre le moyeu 5 et le tambour 2. Les éléments de liaison 6 délimitent entre eux des ouvertures d'aération 19. Les ouvertures d'aération 19 permettent de dissiper la chaleur générée par le freinage des roues. Les éléments de liaison 6 peuvent présenter une section sensiblement carrée, tronconique ou polygonale, avec des angles plus ou moins arrondis. Les éléments de liaison 6 peuvent être pleins ou creux. Ils peuvent aussi comporter une âme rigide par exemple réalisée en mousse de résine époxy thermodurcissable ou toute autre matière équivalente de faible densité (densité de la mousse de résine époxy : 0.2 à 0.4). Les extrémités des éléments de liaison 6 sont solidarisées au tambour 2 lors de la fabrication de l'ensemble structurel monobloc « tambour + voile » 10.

Le flasque 7 comporte, en référence aux figures 1, 2, 4 et 5, une architecture similaire à celle du voile 4, sans que cet exemple ne soit limitatif. Ainsi, il comporte une partie discale ajourée, d'axe Y, pourvue d'une zone centrale plus ou moins rentrante en forme de cuvette 20, l'ouverture centrale 8 prévue dans le fond de cuvette 21, et d'un bord périphérique 23. Le fond de cuvette 21 comporte des trous de passage 22 agencés pour être dans l'alignement des trous de passage 18 du voile 4 pour des organes de fixation de la roue sur le véhicule. Le flasque 7 comporte en outre une pluralité d'éléments de liaison 24, telles que des branches, s'étendant en tout ou partie radialement dans la partie discale restante entre la cuvette 20 et le bord périphérique 23, délimitant entre elles des ouvertures d'aération 25 permettant la dissipation de la chaleur. Le pourtour des éléments de liaison 24 et des ouvertures d'aération 25 comporte un bord 26 replié vers l'intérieur pour créer une section d'emboitement en forme de U, et épouser au moins en partie la forme tridimensionnelle des éléments de liaison 6 du voile 4.

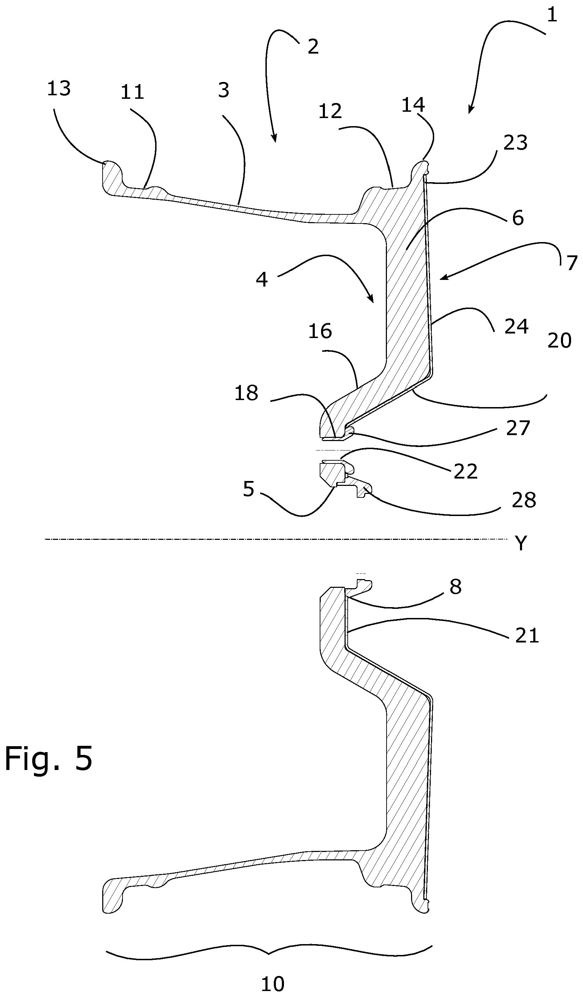

Dans d'autres variantes non représentées, le flasque 7 n'a pas une architecture identique à celle du voile 4, et peut différer par le pourcentage d'ouvertures d'aération 25 dans la partie discale, la forme et la disposition des ouvertures d'aération 25, la forme, l'orientation et la disposition des éléments de liaison 24, la présence ou non d'une cuvette 20, la présence ou non d'une ouverture centrale 8, etc. Dans tous les cas, le flasque 7 est conçu comme une seconde peau agencée pour être en contact surfacique avec tout ou partie du voile 4 et s'étendre jusqu'au rebord de jante extérieur 14 du tambour 2. Le flasque 7 n'a pas vocation à se substituer à tout ou partie des fonctions du tambour 2. La section du flasque 7 représentée à la figure 5 montre le flasque 7 qui épouse les formes tridimensionnelles du voile 4 et s'étend du moyeu central 5, en passant par la cuvette 16, les éléments de liaison 6, jusqu'en dessous du rebord de jante extérieur 14 du tambour 2. Le flasque 7 peut dissimuler le voile 4, 4' dans son entier, ou au contraire, laisser apparaître quelques parties du voile 4, 4', notamment lorsque le voile 4' est fabriqué en matières métalliques, pour apporter une esthétique particulière à la jante 1'.

Le flasque 7 est rapporté et solidarisé à l'ensemble structurel monobloc « tambour + voile » 10 par un collage structural sur tout ou partie de sa surface de contact avec le voile et le tambour, ainsi qu'en périphérie aussi bien intérieure qu'extérieure, ce collage structural ayant pour fonction de transmettre les efforts mécaniques. On choisit plus particulièrement une colle structurale, haute performance, telle qu'une résine époxy. Cette colle devra résister au cisaillement et aux chocs, et garantir l'intégrité de la jante 1 pour éviter tout risque de décollement du flasque 7, et ce quelles que soient les conditions d'utilisation et climatiques. En outre, le flasque 7 pourra être décollé selon différentes méthodes, dont une consiste à déposer la colle sur un primaire d'accrochage ou un promoteur d'adhérence thermofusible, autorisant le décollage volontaire du flasque 7 sous haute température. La jante 1 selon l'invention devient alors réparable, sans avoir besoin de requalifier la jante 1.

Le flasque 7 est réalisé en matériaux composites au moyen de procédés de fabrication connus qui ne seront pas détaillés, et qui permettent de réaliser un flasque 7 alliant résistance, légèreté et esthétique. Les procédés et matériaux cités précédemment pour le tambour 2 et le voile 4 peuvent bien entendu convenir. Le flasque 7 a l'avantage de présenter une forme relativement plane, sa forme géométrique étant moins complexe et comportant moins de variations d'angle que le voile 4. Ainsi, son procédé de fabrication peut être simplifié et facilement automatisé. Il est notamment possible d'utiliser des préformes continues, impossible pour la fabrication le voile 4 qui nécessite un assemblage de sous préformes.

Le flasque 7 comporte, à titre d'exemple non limitatif, une superposition de couches de renfort, également appelées « plis », présentant plusieurs directions de renforcement privilégiées. Les directions de renforcement des couches de renfort sont préférentiellement croisées l'une par rapport à l'autre, et l'angle de croisement peut être compris entre 0° (exclu) et 90°. Au moins une des couches de renfort peut être constituée de mèches de fibres unidirectionnelles s'étendant radialement dans la direction des éléments de liaison 24 du flasque, de la cuvette 20 au bord périphérique 23.

Le flasque 7, qui forme tout ou partie de la face extérieure de la jante 1, permet de personnaliser la jante à souhait, en jouant soit sur les matériaux composites eux-mêmes de la couche externe du flasque 7, soit en rapportant un traitement esthétique. Par exemple, cette surface externe peut être peinte pour une jante économique. Elle peut aussi être constituée au moins d'une couche de renfort spécifique, dans laquelle les fibres sont arrangées entre-elles selon un motif particulier pour une jante plus esthétique. Par exemple, la couche de renfort peut être tissée selon une armure déterminée choisie dans le groupe comportant un sergé, satin, toile, jacquard, ou peut être non tissée. La couche de renfort peut être conçue pour créer un motif répétitif, organisé ou aléatoire, sans que ces exemples ne soient limitatifs.

A titre d'exemple sans que cet exemple ne soit limitatif, le flasque 7 peut comporter trois plis de tissu carbone de 400g/m² et de 0.4mm chacun, terminé par un pli de tissu carbone sergé 2x2 de 200g/m² et de 0.2mm pour donner à la jante un aspect carbone classique (« carbon look » en anglais). Le nombre, le grammage et l'épaisseur de chaque pli peuvent varier en fonction du cahier des charges.

Le flasque 7 peut être complété par des traitements spécifiques, notamment sur sa face extérieure, pour apporter une protection contre les rayonnements ultra-violets, les graisses, le liquide de frein, les fientes d'oiseaux, etc., conformément aux traitements déjà existants.

Le flasque 7 comporte une épaisseur relativement faible déterminée par le nombre et l'épaisseur de chaque pli, cette épaisseur pouvant être comprise entre 0,5mm et 5mm, sans que ces valeurs ne soient limitatives. L'épaisseur du flasque 7 peut être constante dans le sens radial du centre au bord périphérique 23 ou variable graduellement ou non dans certaines zones comme autour ou dans la cuvette 20 où cette épaisseur peut être plus ou moins importante.

La jante 1 selon l'invention, en référence plus particulièrement à la figure 1, comporte également des inserts métalliques 27, 28 disposés au droit des trous de passage 18, 22 pour les organes de fixation 29 (figure 6) de la roue sur le véhicule et/ou du moyeu central 5. Ces inserts métalliques 27, 28 permettent notamment la transmission des efforts de compression des organes de fixation. Ils sont constitués de pièces annulaires, réalisés par exemple en alliage d'aluminium ou similaire, anodisés ou non, moulés et/ou usinés, emmanchés et collés dans les alésages correspondants. L'insert 28 du moyeu central 5 permet en outre la fixation d'un cabochon (non représenté) portant par exemple le logo du véhicule.

Dans la variante de réalisation de la jante hybride 1', en référence aux figures 6 à 9, le tambour 2 est réalisé en matériaux composites comme dans l'exemple précédent et ne sera pas décrit à nouveau, tandis que le voile 4' est réalisé en matériaux métalliques, par exemple en alliage d'aluminium, tôle ou tout autre matériau métallique adapté, par fonderie, forge, emboutissage et/ou usinage. Le flasque 7' rapporté est également réalisé en matériaux composites comme dans l'exemple précédent. La jante hybride 1', moins performante en gain de masse, permet toutefois une gestion des rigidités et peut donc s'avérer intéressante, sachant qu'elle présente de bonnes performances à un moindre coût.

Le voile 4' métallique est structuré de manière similaire au voile 4 composite tel que décrit précédemment, et les parties constitutives similaires portent le même numéro de référence. Il présente cependant une esthétique différente, liée à la forme, la disposition et la répartition des éléments de liaison 6 et des ouvertures d'aération 19. Dans cet exemple, les éléments de liaison 6 sont en forme de V, la pointe du V étant dirigée vers le moyeu central 5 et les deux branches du V étant dirigées vers le tambour 2. Les branches de chaque V peuvent être évidées en tout ou partie pour réduire la masse. Les éléments de liaison 6 délimitent entre eux et entre les branches de chaque V les ouvertures d'aération 19. Dans cet exemple, le taux d'ouverture du voile 4' est supérieur au taux d'ouverture du voile 4 de l'exemple précédent.

La forme tridimensionnelle du voile 4' peut ainsi être optimisée notamment au niveau des éléments de liaison 6 et de la cuvette 16 pour chercher le meilleur compromis « conception/masse/performances ». En outre, les éléments de liaison 6 étant en partie cachés par le flasque 7', leur forme moins soumise à l'esthétique peut être optimisée pour atteindre un bon rapport masse/tenue mécanique. Leur section peut être choisie dans le groupe comprenant au moins les formes suivantes : carrée, ronde, annulaire, polygonale, tronconique, nervurée, en U, I, T, sans que cette liste ne soit exhaustive.

Dans cette variante, le voile 4' est solidarisé au tambour 2 au moyen d'organes de fixation (non représentés) par exemple à visser, ou tout autre procédé d'assemblage, permettant de solidariser les extrémités des éléments de liaison 6 au bord périphérique du tambour 2. Le talon de jante extérieur 12 du tambour 2 peut être épaissi et/ou renforcé pour intégrer les moyens de fixation permettant la transmission des efforts entre le voile 4' et le tambour 2.

Le flasque 7' composite est structuré de manière similaire au flasque 7 composite tel que décrit précédemment, et les parties constitutives similaires portent le même numéro de référence. Il présente cependant une esthétique différente, liée à la forme, la disposition et la répartition des éléments de liaison 24 et des ouvertures d'aération 25. Dans cet exemple, les éléments de liaison 24 comportent des branches en forme de V, disposées en regard des éléments de liaison 6 du voile 4', et des secteurs partiellement fermés entre deux V consécutifs. Les éléments de liaison 24 délimitent entre les branches de chaque V et dans leurs secteurs partiellement fermés, les ouvertures d'aération 25. L'ouverture d'aération 25 prévue dans chaque secteur partiellement fermé comporte un évidement dissymétrique en forme de V prolongé à droite du V par une fente courbe. Dans cet exemple, le taux d'ouverture du flasque 7' est inférieur au taux d'ouverture du flasque 7 de l'exemple précédent.

Dans une variante non représentée de la jante hybride 1', c'est le tambour 2 qui est réalisé en matériaux métalliques, tandis que le voile 4 est réalisé en matériaux composites.

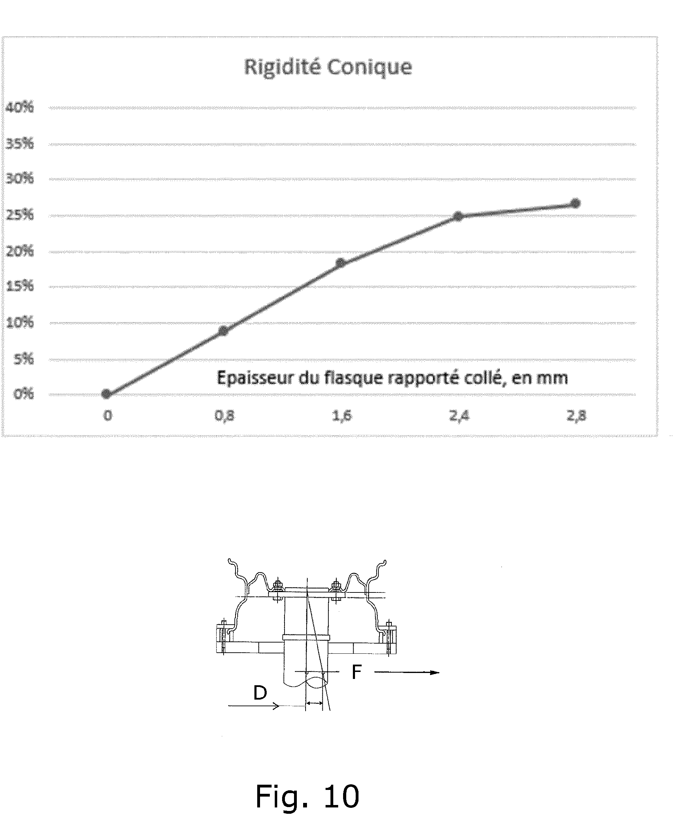

Lors des essais, il a été découvert de manière surprenante que l'ajout du flasque 7, 7' comme une seconde peau au voile 4, 4' de la jante 1, 1', permet d'améliorer les propriétés mécaniques de la jante, en jouant sur les variations structurelles dudit flasque 7, 7'. Majoritairement 70 à 90% des propriétés mécaniques de la jante sont réalisées par le voile 4, 4' associé au tambour 2, tandis que le reste est réalisé par le flasque 7, 7'. En jouant sur les rigidités apportées à la jante 1,1' par le flasque 7, 7', le comportement du véhicule au roulage devient plus stable, et un gain aérodynamique est observé, dû notamment à sa conception et à son taux d'ouverture qui peut être réduit par rapport à celui du voile 4, 4'. C'est ainsi que la fabrication du flasque 7, 7' en tant que pièce séparée, présentant une géométrie simplifiée, permet de modifier relativement facilement ses paramètres de fabrication pour ajuster les performances mécaniques de la jante 1, 1', et notamment l'une au moins de ses rigidités, telles que la rigidité radiale, la rigidité axiale ou la rigidité conique (voir figures 10 à 11). En effet, le flasque 7 rapporté se comporte comme une multitude d'haubans tendus entre les extrémités diamétralement opposées de la jante 1, 1', générant une multitude d'effets de levier qui compensent automatiquement les déformations de la jante, notamment dans le sens axial. Autrement dit, le flasque 7, 7' est une seconde peau rapportée à la structure de la jante 4, 4', qui travaille principalement en traction/compression, ce qui est bien adapté pour une conception du flasque 7, 7' en matériaux composites, notamment en fibres de carbone.

Les paramètres de fabrication du flasque 7, 7' qu'il est possible de faire varier sont nombreux, et on peut citer notamment : le module des fibres de renfort dans chaque pli, l'angle de croisement des plis entre eux, le nombre de plis qui détermine l'épaisseur du flasque, la répartition des plis qui permet de faire varier l'épaisseur du flasque dans le sens radial, la surface de collage, le type de colle structurale et l'épaisseur de colle entre le flasque 7, 7' d'une part et le voile 4, 4' et le tambour 2 d'autre part, le taux d'ouverture. La liste des paramètres de fabrication modifiables n'est pas exhaustive.

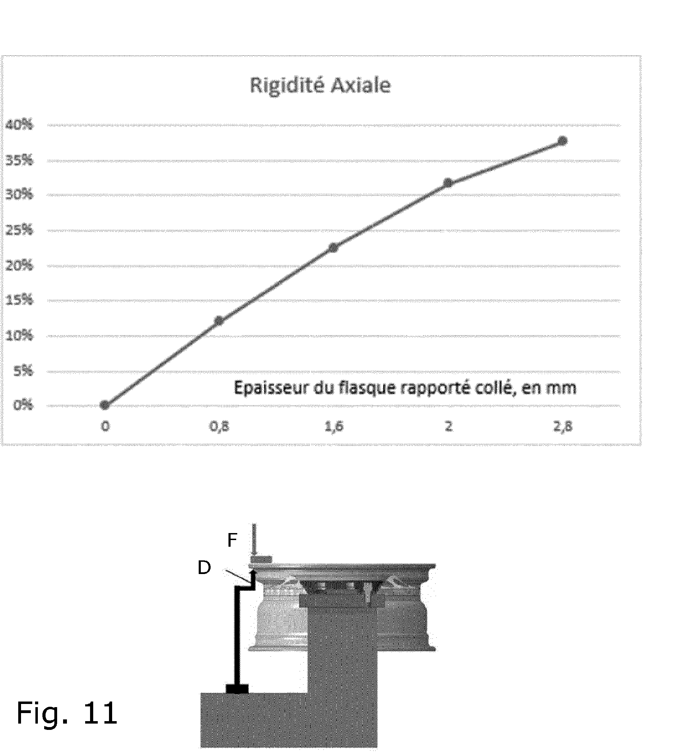

Cependant, le flasque 7, 7' étant réalisé en matériaux composites et devant être assez fin pour ne pas apporter trop de masse, le principal paramètre à déterminer est l'épaisseur du flasque, qui conduit au choix du type de fibres, de leur quantité et de leur orientation pour obtenir les niveaux de rigidité souhaités. Cette épaisseur est obtenue en empilant différents plis, qui peuvent avoir des grammages différents, donc des épaisseurs différentes par exemple de 0.1mm à 0.4mm. Les gains de rigidités de la jante 1 tout composite, tels qu'illustrés dans les figures 10 et 11, ont été évalués sur une plage d'épaisseur allant jusqu'à 2.8mm, sans que cette valeur ne soit limitative.

Les figures 10 et 11 illustrent sous forme de graphes, des mesures réalisées sur bancs d'essais permettant d'évaluer l'apport de rigidité en pourcentage (« % » en ordonnée) de la jante 1 de structure tout composite, en fonction d'un flasque 7 rapporté et collé de différentes épaisseurs (« mm » en abscisse). Le calcul des rigidités se fait part le rapport entre la déflection D de la jante fixée sur un arbre et la charge F appliquée pour obtenir cette déflection. Pour obtenir la rigidité conique selon la figure 10, on applique une charge F perpendiculaire à l'axe central Y de la jante 1, sur un point appartenant à un arbre fixé au moyeu central 5, et on mesure la déflection D de la jante en ce point. Pour obtenir la rigidité axiale selon la figure 11, on applique une charge F parallèle à l'axe central Y de la jante 1, sur un point périphérique du tambour 2, et on mesure la déflection D axiale de la jante en ce point. Pour obtenir la rigidité radiale (non représentée car moins flagrante), on applique une charge perpendiculaire à l'axe de la jante 1, sur un point du talon de jante intérieur 11 du tambour 2, et on mesure la déflection radiale de la jante en ce point.

La figure 10 illustre le pourcentage d'amélioration sur la rigidité conique de la jante 1. On observe que la courbe qui relie les mesures est sensiblement linéaire de 0mm à 1,6mm passant d'un gain de 0% à 18%, s'infléchit légèrement de 1,6mm à 2mm passant d'un gain de 18% à 25%, et s'arrondie de 2mm à 2,8mm passant d'un gain de 25% à 27%.

La figure 11 illustre le pourcentage d'amélioration sur la rigidité axiale de la jante 1. On observe que la courbe qui relie les mesures est sensiblement linéaire de 0mm à 1,6mm passant d'un gain de 0% à 23%, et s'infléchit légèrement de 1,6mm à 2,8mm passant d'un gain de 23% à 38%.

Ces graphes illustrent très clairement que le flasque 7 et l'épaisseur de ce flasque jouent un rôle significatif sur l'amélioration des rigidités de la jante 1. Le choix de l'épaisseur du flasque 7 sera donc un compromis entre les différentes rigidités de la jante 1 souhaitées. En réglant les rigidités entre les jantes avant et les jantes arrière, il est ainsi possible de modifier le comportement au roulage d'un véhicule et d'en améliorer sa stabilité. Le lien entre rigidités des jantes et stabilité au roulage d'un véhicule a notamment fait l'objet de l'étude suivante : Hirano, A., "Study on Wheel Stiffness Considering Balance between Driving Stability and Weight," SAE Int. J. Commer. Veh. 8(1):2015, doi:10.4271/2015-01-1755.

En jouant sur tout ou partie des paramètres de fabrication du flasque 7, 7', les essais ont montré qu'il est possible d'adapter la jante 1, 1' au besoin de la voiture et d'obtenir des performances équivalentes, voire supérieures aux jantes classiques forgées en alliage d'aluminium.

La présente invention n'est bien entendu pas limitée aux exemples de réalisation décrits mais s'étend à toute modification et variantes évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Jante (1, 1') composite pour roue de véhicule, comportant un tambour (2) pourvu d'un fond de jante (3) destiné à recevoir un pneumatique, et un voile (4, 4') pourvu d'un moyeu central (5) destiné à être monté sur un essieu de véhicule et d'une pluralité d'éléments de liaison (6) s'étendant entre le moyeu central (5) et le tambour (2), jante comportant en outre un flasque (7, 7') composite et rapporté, qui recouvre au moins partiellement ledit voile (4, 4'), forme en tout ou partie la face extérieure de la jante, épouse en tout ou partie les formes dudit voile (4, 4'), et est solidarisé en tout ou partie aux éléments de liaison (6) dudit voile et audit tambour (2) pour former une jante structurelle monobloc renforcée, ledit flasque (7, 7') étant agencé pour ajuster les performances mécaniques de ladite jante (1, 1'), la jante étant **caractérisée en ce que** le tambour (2), le voile (4, 4') et le flasque (7, 7') constituent des pièces de structure, lesdites pièces de structure étant réalisées en matériaux composites formant une jante tout composite, ou l'une des pièces de structure parmi ledit tambour (2) et ledit voile (4, 4') étant réalisée en matériaux métalliques et l'autre pièce de structure parmi ledit voile et ledit tambour étant réalisée en matériaux composites formant une jante hybride.

2. Jante selon la revendication 1, **caractérisée en ce que** ledit flasque (7, 7') est en contact surfacique avec tout ou partie des éléments de liaison (6) et avec au moins un bord périphérique dudit tambour (2), ledit flasque (7, 7') étant solidarisé audit voile (4, 4') et audit tambour (2) par un collage structural.

3. Jante selon la revendication 1, **caractérisée en ce que**, lorsque lesdites pièces de structure parmi ledit tambour (2) et ledit voile (4) sont réalisées en matériaux composites, elles forment un ensemble structurel monobloc (10).

4. Jante selon la revendication 1, **caractérisée en ce que**, lorsque l'une desdites pièces de structure parmi ledit tambour (2) et ledit voile (4') est réalisée en matériaux métalliques, et que l'autre pièce de structure parmi ledit voile et ledit tambour est réalisée en matériaux composites, elles sont solidarisées par des organes de fixation.

5. Jante selon la revendication 1, **caractérisée en ce que** ledit flasque (7, 7') comporte une superposition de couches de renfort présentant des directions de renforcement privilégiées, les directions de renforcement desdites couches de renfort étant croisées l'une par rapport à l'autre, et imprégnées par une matrice, et **en ce que** les renforts desdites couches sont choisis dans le groupe comprenant les fibres de carbone, les fibres minérales, végétales, artificielles, synthétiques, métalliques, animales, ou une combinaison d'au moins desdites fibres.

6. Jante selon la revendication 5, **caractérisée en ce qu'**au moins une des couches de renfort dudit flasque (7, 7') est constituée de mèches de fibres unidirectionnelles s'étendant en tout ou partie radialement dans ledit flasque (7, 7').

7. Jante selon la revendication 1, **caractérisée en ce que** ledit flasque (7) comporte une surface externe comportant au moins une couche de renfort tissée ou non tissée, ladite couche de renfort définissant un motif répétitif, organisé ou aléatoire.

8. Jante selon l'une quelconque des revendications 5 à 7, **caractérisée en ce que** ledit flasque (7) présente une épaisseur comprise entre 0,5mm et 5mm, ladite épaisseur étant constante ou variable au moins dans le sens radial.

9. Jante selon la revendication 1, **caractérisée en ce que** ledit flasque (7) comporte une paroi discale ajourée et/ou une pluralité d'éléments de liaison (24), tout ou partie des éléments de liaison (24) du flasque (7) épousant la forme des éléments de liaison (6) dudit voile (4, 4').

10. Jante selon l'une quelconque des revendications précédentes, **caractérisée en ce qu'**elle comporte des inserts métalliques (27, 28) sous la forme de pièces annulaires positionnées au droit des trous de passage (18, 22) pour des organes de fixation de la roue sur le véhicule et/ou du moyeu central (5).

11. Jante selon l'une quelconque des revendications précédentes, **caractérisée en ce qu'**elle comporte, sur sa face extérieure, une zone centrale rentrante en forme de cuvette (16, 20), comportant ledit moyeu central (5), ladite cuvette (16, 20) étant définie par ledit voile (4, 4') et recouverte par ledit flasque (7, 7').

12. Jante selon l'une quelconque des revendications précédentes, **caractérisée en ce que** ledit tambour (2) comporte une collerette extérieure (12, 14) faisant partie intégrante du tambour (2) ou rapportée au fond de jante (3) dudit tambour (2).

## Patentansprüche

1. Verbundstofffelge (1,1') für Fahrzeugräder, die eine Trommel (2), welche mit einem Felgenboden (3) versehen ist, der dafür bestimmt ist, einen Luftreifen aufzunehmen, und einen Radkranz (4, 4') aufweist, welcher mit einer mittigen Nabe (5) versehen ist, die dafür bestimmt ist, auf eine Fahrzeugachse montiert zu werden, und einer Mehrzahl an Verbindungselementen (6) versehen ist, die sich zwischen der mittigen Nabe (5) und der Trommel (2) erstrecken, wobei die Felge darüber hinaus eine Scheibe (7, 7') aufweist, die aus Verbundstoff ist und angeformt ist, wobei sie den Radkranz (4, 4') zumindest teilweise bedeckt, die Gesamtheit oder einen Teilbereich der Außenseite der Felge bildet, vollständig oder teilweise an den Formen des Radkranzes (4, 4') anliegt und vollständig oder teilweise fest mit den Verbindungselementen (6) des Radkranzes und der Trommel (2) verbunden ist, um eine verstärkte einstückige Felge zu bilden, wobei die Scheibe (7, 7') derart angeordnet ist, dass die mechanischen Leistungskennwerte der Felge (1, 1') eingestellt werden, wobei die Felge **dadurch gekennzeichnet ist, dass** die Trommel (2), der Radkranz (4, 4') und die Scheibe (7, 7') Strukturbauteile darstellen, wobei die Strukturbauteile aus Verbundmaterialien hergestellt sind, sodass eine Vollverbundstofffelge gebildet wird, oder von den Strukturbauteilen Trommel (2) und Radkranz (4, 4') eines aus metallischen Materialien hergestellt ist und das andere der Strukturbauteile Trommel und Radkranz aus Verbundmaterialien hergestellt ist, sodass eine Hybridfelge gebildet wird.

2. Felge nach Anspruch 1, **dadurch gekennzeichnet, dass** die Scheibe (7, 7') in flächigem Kontakt mit der Gesamtheit oder einem Teilbereich der Verbindungselemente (6) und mit einem umlaufenden Rand der Trommel (2) steht, wobei die Scheibe (7, 7') durch strukturelles Kleben fest mit dem Radkranz (4, 4') und der Trommel (2) verbunden ist.

3. Felge nach Anspruch 1, **dadurch gekennzeichnet, dass** die Strukturbauteile Trommel (2) und Radkranz (4), wenn sie aus Verbundmaterialien hergestellt sind, eine einstückige strukturelle Gesamtheit (10) bilden.

4. Felge nach Anspruch 1, **dadurch gekennzeichnet, dass** die Strukturbauteile Trommel (2) und Radkranz (4'), wenn eines davon aus metallischen Materialien hergestellt sind und das andere der Strukturbauteile Radkranz und Trommel aus Verbundmaterialien hergestellt ist, durch Befestigungsorgane fest miteinander verbunden sind.

5. Felge nach Anspruch 1, **dadurch gekennzeichnet, dass** die Scheibe (7, 7') eine Überlagerung von Schichten aus Verstärkungselementen aufweist, die bevorzugte Verstärkungsrichtungen aufweisen, wobei die Verstärkungsrichtungen der Schichten aus Verstärkungselementen sich kreuzen, und sie mit einer Matrix durchtränkt sind, und dadurch, dass die Verstärkungselemente der Schichten aus der Gruppe ausgewählt sind, die Kohlenstofffasern, Fasern mineralischer, pflanzlicher, künstlicher, synthetischer, metallischer, tierischer Art oder eine Kombination zumindest dieser Fasern umfasst.

6. Felge nach Anspruch 5, **dadurch gekennzeichnet, dass** mindestens eine der Schichten aus Verstärkungselementen der Scheibe (7, 7') aus Vorgarn aus gleichgerichteten Fasern besteht, das sich innerhalb der Scheibe (7, 7') vollständig oder teilweise radial erstreckt.

7. Felge nach Anspruch 1, **dadurch gekennzeichnet, dass** die Scheibe (7) eine Außenfläche aufweist, die mindestens eine gewebe- oder vliesartige Schicht aus Verstärkungselementen aufweist, wobei die Schicht aus Verstärkungselementen ein sich wiederholendes, organisiertes oder zufälliges Muster festlegt.

8. Felge nach einem beliebigen der Ansprüche 5 bis 7, **dadurch gekennzeichnet, dass** die Scheibe (7) eine Dicke im Bereich von 0,5 mm bis 5 mm aufweist, wobei die Dicke zumindest in radialer Richtung konstant oder variabel ist.

9. Felge nach Anspruch 1, **dadurch gekennzeichnet, dass** die Scheibe (7) eine mit Aussparungen versehene Scheibenwand und/oder eine Mehrzahl an Verbindungselementen (24) aufweist, wobei die Gesamtheit oder ein Teil der Verbindungselemente (24) der Scheibe (7) an der Form der Verbindungselemente (6) des Radkranzes (4, 4') anliegt.

10. Felge nach einem beliebigen der vorhergehenden Ansprüche, **dadurch gekennzeichnet, dass** sie metallische Einlagestücke (27, 28) in Form von ringartigen Bauteilen aufweist, welche auf Höhe der Durchgangslöcher (18, 22) für die Organe angeordnet sind, mittels derer das Rad am Fahrzeug und/oder die mittige Nabe (5) befestigt wird/werden.

11. Felge nach einem beliebigen der vorhergehenden Ansprüche, **dadurch gekennzeichnet, dass** sie auf ihrer Außenseite einen zurückgesetzten mittigen Bereich in Form einer Mulde (16, 20) aufweist, welche die mittige Nabe (5) aufweist, wobei Mulde (16, 20) von dem Radkranz (4, 4') begrenzt und von der Scheibe (7, 7') bedeckt wird.

12. Felge nach einem beliebigen der vorhergehenden Ansprüche, **dadurch gekennzeichnet, dass** die Trommel (2) einen außenliegenden Kragen (12, 14) aufweist, der fester Bestandteil der Trommel (2) ist oder an den Felgenboden (3) der Trommel (2) angeformt ist.

## Claims

1. A composite rim (1, 1') for a vehicle wheel, comprising a drum (2) provided with a rim bottom (3) intended to receive a tire, and a web (4, 4') provided with a central hub (5) intended to be mounted on a vehicle axle and with a plurality of connecting elements (6) extending between the central hub (5) and the drum (2), the rim further comprising:
a composite and attached flange (7, 7'), which at least partially covers said web (4, 4'), forms all or part of the outer face of the rim, matches all or part of the shapes of said web (4, 4'), and is secured all or part to the connecting elements (6) of said web and to said drum (2) to form a reinforced one-piece structural rim, said flange (7, 7) being arranged to adjust the mechanical performance of said rim (1, 1'), the rim being **characterised in that** the drum (2), the web (4, 4 ') and the flange (7, 7') constitute structural parts, said structural parts being made of composite materials forming an all-composite rim, or one of the structural parts among said drum (2) and said web (4, 4') being made of metal materials and the other structural part among said web and said drum being made of composite materials forming a hybrid rim.

2. The rim according to claim 1, **characterised in that** said flange (7, 7') is in surface contact with all or part of the connecting elements (6) and with at least one peripheral edge of said drum (2), said flange (7, 7') being secured to said web (4, 4') and to said drum (2) by structural bonding.

3. The rim according to claim 1, **characterised in that**, when said structural parts among said drum (2) and said web (4) are made of composite materials, they form a one-piece structural assembly (10).

4. The rim according to claim 1, **characterised in that**, when one of said structural parts among said drum (2) and said web (4') is made of metallic materials, and the other structural part among said web and said drum is made of composite materials, they are secured by fixing members.

5. The rim according to claim 1, **characterised in that** said flange (7, 7') comprises a superposition of reinforcement layers having preferential reinforcement directions, the reinforcement directions of said reinforcement layers being crossed with respect to each other, and impregnated with a matrix, and **in that** the reinforcements of said layers are selected from the group comprising carbon fibres, mineral, plant, artificial, synthetic, metal, animal fibres, or a combination of at least said fibres.

6. The rim according to claim 5, **characterised in that** at least one of the reinforcing layers of said flange (7, 7') consists of unidirectional fibre rovings extending all or part radially in said flange (7, 7').

7. The rim according to claim 1, **characterised in that** said flange (7) comprises an outer surface comprising at least one woven or non-woven reinforcing layer, said reinforcing layer defining a repetitive, organised or random pattern.

8. The rim according to any one of claims 5 to 7, **characterised in that** said flange (7) has a thickness of between 0.5 mm and 5 mm, said thickness being constant or variable at least in the radial direction.

9. The rim according to claim 1, **characterised in that** said flange (7) comprises a perforated disc wall and/or a plurality of connecting elements (24), all or part of the connecting elements (24) of the flange (7) matching the shape of the connecting elements (6) of said web (4, 4').

10. The rim according to any one of the preceding claims, **characterised in that** it comprises metal inserts (27, 28) in the form of annular parts positioned in line with the passage holes (18, 22) for members for fixing the wheel to the vehicle and/or the central hub (5).

11. The rim according to any one of the preceding claims, **characterised in that** it comprises, on its outer face, a bowl-shaped recessed central area (16, 20), comprising said central hub (5), said bowl (16, 20) being defined by said web (4, 4') and covered by said flange (7, 7').

12. The rim according to any one of the preceding claims, **characterised in that** said drum (2) comprises an outer collar (12, 14) integrally with the drum (2) or attached to the rim bottom (3) of said drum (2).
